# EUROPÄISCHE PATENTSCHRIFT

(11) **EP 2 150 763 B1**
(45) Veröffentlichungstag und Bekanntmachung des Hinweises auf die Patenterteilung: **25.05.2011**
(21) Anmeldenummer: 08760127.4
(22) Anmeldetag: 28.05.2008
(51) Int. Cl.: F27D 17/00

(54) **VERFAHREN UND VORRICHTUNG ZUR NUTZUNG VON DURCH EINEN DISKONTINUIERLICHEN ABGASSTROM TRANSPORTIERTER WÄRME**
METHOD AND DEVICE FOR UTILIZING HEAT TRANSPORTED BY A DISCONTINUOUS FLOW OF EXHAUST GASES
PROCÉDÉ ET DISPOSITIF D'UTILISATION DE LA CHALEUR TRANSPORTÉE PAR UN COURANT DISCONTINU DE GAZ DE COMBUSTION

(30) Priorität: 04.06.2007 DE 102007025978
(43) Veröffentlichungstag der Anmeldung: 10.02.2010
(73) Patentinhaber: Siemens Aktiengesellschaft, 80333 München (DE)
(72) Erfinder: GARBE, Hanno, Aviemore PH22 1 SH (GB); LENGERT, Jörg, 91475 Lonnerstadt-Ailsbach (DE); MATSCHULLAT, Thomas, 90542 Eckental (DE)
(74) Vertreter: Wolff, Harry
(86) Internationale Anmeldenummer: PCT/EP2008/056531
(87) Internationale Veröffentlichungsnummer: WO 2008/148674

(56) Entgegenhaltungen:
- DE-A1- 3 606 681
- DE-B- 1 008 340

## Beschreibung

Die Erfindung betrifft ein Verfahren und eine Vorrichtung zur Nutzung von durch einen diskontinuierlichen Abgasstrom transportierter Wärme gemäß Patentanspruch 1 bzw. Patentanspruch 10.

Bei Industrieöfen, beispielsweise in der Stahlindustrie, treten im Betrieb, insbesondere bei einem Schmelzvorgang, beispielsweise in einem elektrischen Lichtbogenofen, hohe Temperaturen im Abgas auf. Die hohe Abgastemperatur wird in einem Abgaskanal bzw. Rauchgaskanal mittels eines Wasserkühlkreislaufes bzw. durch Einkopplung von zusätzlichem Wasser in den Abgasmassenstrom heruntergekühlt, bevor das Abgas durch einen Filter der Umwelt zugeführt wird. Das Herunterkühlen der Abgastemperatur ist für eine nachgeschaltete Abgasreinigungsanlage notwendig, da nur bei einer bestimmten Abgastemperatur ein effektiver Reinigungseffekt erzielt werden kann. Hierbei ist es von Nachteil, dass für den Betrieb des Kühlkreislaufes elektrische Energie aufgebracht werden muss.

Die dem Abgasstrom mittels des Kühlkreislaufes entzogene Wärme bleibt dabei ungenutzt, da der die Wärme transportierende Abgasstrom zu ungleichmäßig ist. Aufgrund des Anlagenbetriebes sind sowohl der Volumenstrom als auch die Temperatur des Abgasstromes nur phasenweise konstant. In den unterschiedlichen, aufeinanderfolgenden Betriebsphasen können Volumenstrom und/oder Temperatur stark variieren. Somit liegt ein hinsichtlich des Wärmestromes diskontinuierlicher Abgasstrom vor, dessen transportierte Wärmeenergie nicht ohne weiteres durch herkömmliche technische Einrichtungen, wie etwa ein Wärmetauscher nutzbar ist.

Aus der DE 36 06 681 A1 ist ein Verfahren zur Rückgewinnung und anschließenden Nutzung von Abwärmeenergie unter Verwendung mindestens eines Primärwärmeaustauschers, der von einem flüssigen Wärmeübertragungsmedium durchströmt wird, bekannt, bei dem die Abwärme in einem mit stückigem, vom Wärmeübertragungsmedium umströmten Feststoff als Speichermedium befüllten Wärmespeicher auf hohem Temperaturniveau zwischengespeichert wird und in kontinuierlicher Weise aus diesem Wärmespeicher zur weiteren Nutzung abgezogen wird.

Die sich aus den Nachteilen des Standes der Technik ergebende Aufgabe der Erfindung ist es, ein Verfahren und eine Vorrichtung bereitzustellen, welche die in einem diskontinuierlichen Abgasstrom transportierte Wärme in Nutzenergie umwandelt.

Erfindungsgemäß wird die verfahrensbezogene Aufgabe gelöst, indem Ausgangswerte für Volumenstrom und Temperatur des durch die Industrieanlage abgegebenen Abgasstromes durch Messmittel erfasst werden und der diskontinuierliche Abgasstrom in einen kontinuierlichen Arbeitsstrom mit einstellbaren konstanten Zielwerten für Volumenstrom und Temperatur durch ein Zusammenwirken der Messmittel mit Stellmitteln zur Abzweigung oder Zuführung eines Teilstromes vom bzw. um Abgasstrom umgewandelt wird, wobei die im kontinuierlichen Arbeitsstrom transportierte Wärme in mechanische, elektrische oder thermische Nutzenergie umgewandelt wird. Die durch einen Betriebsphasenwechsel des Ofens entstehenden mitunter hohen Volumenstrom- und Temperaturschwankungen im Abgasstrom werden derart vergleichmäßigt, dass eine nachfolgende Nutzung der im Abgasstrom transportierten Wärme möglich wird. Der nach der Umwandlung vorliegende kontinuierliche Arbeitsstrom mit nahezu konstantem Volumenstrom und konstanter Temperatur kann nun für eine Umwandlung der transportierten Wärmeenergie in andere Energieformen genutzt werden. Diese definierten Verhältnisse und Gegebenheiten ermöglichen beispielsweise eine optimale Auslegung der für die Nutzenergieumwandlung verwendeten technischen Einrichtungen, beispielsweise eines Wärmetauschers.

Nach einer vorteilhaften Weiterbildung des erfindungsgemäßen Verfahrens wird während einer ersten Phase, in welcher der Ausgangswert des Volumenstromes größer ist als sein Zielwert, ein Teilstrom von dem Abgasstrom abgeführt. Die Größe des abzuführenden Teilstromes richtet sich dabei neben dem Ausgangswert für den Volumenstrom auch nach der Temperatur des Abgasstromes in der jeweiligen Betriebsphase des Ofens. Es wird also in einem vorzugsweise bestimmbaren Verhältnis ein hinsichtlich der Zielwerte für den Arbeitsstrom überschüssiger Anteil des Abgasstromes abgeführt. Ist beispielsweise der Ausgangswert für die Temperatur bereits gleich seinem Zielwert, so wird nur soviel von dem Volumenstrom abgeführt, dass dessen Zielwert erreicht wird. Ist der Ausgangswert für die Temperatur größer als sein zielwert, so wird zusätzlich zu dem abgeführten Anteil zur Erreichung des Zielwertes des Volumenstromes ein weiterer Anteil des Volumenstromes abgeführt. Dieser weitere Anteil wird in einem späteren Verfahrensschritt zur Einstellung des Zielwertes für die Temperatur, beispielsweise als Umgebungsluft, wieder zugegeben, so wird der Zielwert des Volumenstromes eingehalten.

Weiterhin wird auf vorteilhafte Weise während einer zweiten Phase, in welcher der Ausgangswert des Volumenstromes kleiner ist als sein Zielwert, dem Abgasstrom ein Teilstrom zugeführt. Die Größe des zuzuführenden Teilstromes richtet sich dabei neben dem Ausgangswert für den Volumenstrom vorzugsweise nach der Temperatur des Abgasstromes in der nun vorherrschenden Betriebsphase des Ofens. Ist beispielsweise der Ausgangswert für die Temperatur bereits gleich seinem Zielwert, so wird nur soviel dem Volumenstrom zugeführt, dass dessen Zielwert erreicht wird. Ist der Ausgangswert für die Temperatur größer als sein Zielwert, so wird dem Volumenstrom weniger zugeführt, als zur Erreichung seines Zielwertes nötig ist. Der um diesen Anteil reduzierte Volumenstrom wird ebenfalls in einem späteren Verfahrensschritt zur Einstellung des Zielwertes für die Temperatur als beispielsweise ein Kaltluft-Volumenstrom wieder zugegeben. Auf diese Weise können die Zielwerte für Volumenstrom und Temperatur im Arbeitsstrom gehalten werden.

In einer bevorzugten Ausgestaltung des erfindungsgemäßen Verfahrens wird dem Abgasstrom Umgebungsluft zugeführt. Das Zuführen von zusätzlicher Umgebungsluft wird nach Zuführen bzw. Abführen des Teilstromes durchgeführt. Der Wert des zuzuführenden Volumenstromes der Umgebungsluft, vorzugsweise Kaltluft, richtet sich wie bereits beschrieben nach dem Wert der Ausgangstemperatur, so kann durch ein geregeltes Beimischen von Kaltluft die Zieltemperatur erreicht werden. Eine Regeleinrichtung, welche die Betriebsphasen bedingten Ausgangswerte auswertet und für die Einhaltung der Zielwerte sorgt, kann auf vorteilhafte Weise für das Verfahren ertüchtig werden.

In weiterer vorteilhafter Ausgestaltung des Verfahrens wird der abgeführte Teilstrom durch ein wärmespeicherndes Element geleitet und dabei vom Teilstrom transportierte Wärme an das Element übertragen. So wird zweckmäßigerweise die zuvor durch den überschüssigen Volumenstrom transportierte Wärme in dem wärmespeichernden Element gespeichert und kann für verschiedenste Anwendungen in der Industrieanlage genutzt werden.

Mit Vorteil erfolgt dies beispielsweise dadurch, dass der zuzuführende Teilstrom durch das wärmespeichernde Element geleitet und dabei die im Element gespeicherte Wärme an den Teilstrom übertragen wird. Die so an den zuzuführenden Teilstrom übertragene Wärme wird zur Erreichung der Zielwerte genutzt. Es wird also in den verschiedenen Betriebsphasen des Industrieofens mittels des wärmespeichernden Elementes entweder überschüssige Wärme gespeichert oder benötigte Wärme abgegeben.

Verfahrensgemäß ist es auch von Vorteil, wenn die Teilströme parallel durch mehrere wärmespeichernde Elemente geleitet werden. Beispielsweise könnten aufgrund einer in dem Abgasstrom enthaltenen hohen thermischen Energie, welche ein einziges Element nicht allein aufnehmen kann, zwei wärmespeichernde Elemente in einer Parallelschaltung je einen Anteil der thermischen Energie aufnehmen. Bedingt durch die Mehrfachauslegung der wärmespeichernden Elemente können die baulichen Abmaße jedes einzelnen wärmespeichernden Elementes gering gehalten werden. Alternativ kann aus Verfügbarkeitsgründen ein drittes wärmespeicherndes Element vorgesehen sein, sodass beispielsweise eine zwei von drei Auswahlmöglichkeit besteht.

Für eine vorteilhafte Bereitstellung der Nutzenergie wird die vom Arbeitsstrom transportierte Wärme an ein Arbeitsmedium übertragen, welches einen Energiewandler antreibt. Für die Übertragung der im Arbeitsstrom transportierten Wärme an das Arbeitsmedium wird ein Wärmetauscher genutzt, welcher mittels des Arbeitsmediums die Umwandlung von Wärmeenergie in mechanische Energie oder in Heizenergie für ein Gebäude ermöglicht.

Zweckmäßigerweise zirkuliert das Arbeitsmedium in einem geschlossenen Kreislauf und treibt eine mit einem Generator gekoppelte Turbine an. So kann auf vorteilhafte Weise die bisher ungenutzte Wärmeenergie diskontinuierlicher Abgasströme in elektrische Energie umgewandelt werden.

Die vorrichtungsbezogene Aufgabe wird gelöst durch eine Vorrichtung zur Nutzung von durch einen diskontinuierlichen Abgasstrom transportierter Wärme, wobei der diskontinuierliche Abgasstrom in Phasen mit jeweils konstanten Ausgangswerten für Volumenstrom und Temperatur von einer Industrieanlage, insbesondere einem Industrieofen, abgegeben wird, umfassend Messmittel zur Erfassung der Ausgangswerte für Volumenstrom und Temperatur des durch die Industrieanlage abgegebenen Abgasstromes, Stellmittel zur Abzweigung oder Zuführung eines Teilstromes vom bzw. zum Abgasstrom, wobei die Stellmittel mit den Messmitteln derart zusammenwirken, dass der Abgasstrom in einen kontinuierlichen Arbeitsstrom mit konstanten Zielwerten für Volumenstrom und Temperatur umgewandelt wird, und Mittel zur Umwandlung von im kontinuierlichen Arbeitsstrom transportierter Wärme in mechanische oder elektrische oder thermische Nutzenergie. Die Messmittel sind hierbei in Strömungsrichtung vor den Stellmitteln zum Abführen bzw. Zuführen eines Teilstromes angeordnet und ermitteln die Ausgangswerte für Volumenstrom und Temperatur des diskontinuierlichen Abgasstromes und erfassen somit, welche Betriebsphase der Industrieanlage momentan vorliegt bzw. ob ein Phasenwechsel vorliegt. Mit den ermittelten Werten können über eine Regel- oder Steuereinrichtung, beispielweise ein Automatisierungsgerät, die Stellmittel phasenabhängig zur Erreichung des kontinuierlichen Abgasstromes gesteuert bzw. geregelt werden.

Zweckmäßigerweise sind die Stellmittel derart ausgebildet, dass während einer ersten Phase, in welcher der Ausgangswert des Volumenstromes größer ist als sein Zielwert, ein Teilstrom von dem Abgasstrom abführbar ist und wobei während einer zweiten Phase, in welcher der Ausgangswert des Volumenstroms kleiner ist als sein Zielwert dem Abgasstrom ein Teilstrom zuführbar ist. Die Stellmittel sind dabei vorzugsweise als elektrisch steuerbare Ventile oder Klappen ausgebildet, welche in Rohrleitungen bzw. in Abgasschächten oder Kanälen angeordnet sind. Die Messmittel sind beispielsweise als ein Temperatursensor und als ein Strömungssensor ausgestaltet, welche mit dem Automatisierungsgerät verbunden sind. Über einen im Automatisierungsgerät implementierten Regelalgorithmus können die Messwerte ausgewertet werden und das Automatisierungsgerät kann entsprechende Stellwerte an die den Ventilen oder Klappen zugeordneten Stellmotoren weitergeben, sodass die Zielwerte für Temperatur und Volumenstrom einstellbar sind.

In einer vorteilhaften Weiterbildung sind Zuführmittel zur Zuführung von Umgebungsluft zu dem Abgasstrom stromabwärts nach den Stellmitteln angeordnet. Durch eine gezielte Beimischung von beispielsweise Kaltluft zu dem Abgasstrom nach den Stellmitteln kann vorzugsweise für den Temperaturwert eine weitere Einstellung vorgenommen werden. Ist beispielsweise die Temperatur des verbleibenden Abgasstromes noch größer als der Zielwert des Arbeitsstromes, kann sie durch Zugabe von Kaltluft über beispielsweise einen in einer Zuführleitung angeordneten motorgetriebenen Kompressor auf ihren Zielwert gebracht werden.

Zweckmäßigerweise weist die Vorrichtung ein wärmespeicherndes Element auf, durch das der vom Abgasstrom abgeführte Teilstrom zur Wärmeabgabe und der dem Abgasstrom zugeführte Teilstrom zur Wärmeaufnahme leitbar ist. Vorzugsweise ist das wärmespeichernde Element ein Schüttgutregenerator. Mittels dieses Schüttgutregenerators ist es möglich, die Wärme bedarfsweise zwischenzuspeichern bzw. wieder abzugeben.

In einer vorteilhaften Weiterbildung der Vorrichtung sind die Mittel zur Umwandlung als ein Wärmetauscher mit einem Arbeitsmedium ausgebildet, mit welchem Wärme kontinuierlich aus dem Arbeitsstrom aufnehmbar und einem Energiewandler zur Umwandlung der Wärme in Nutzenergie zuführbar ist. Mittels des Wärmetauschers, auch Rekuperator genannt, findet vorzugsweise eine indirekte Wärmeübertragung vom Arbeitsstrom zum Arbeitsmedium statt, wobei der Abgasstrom vom Arbeitsmedium durch eine wärmedurchlässige Wand räumlich getrennt ist. Eine Vermischung von Abgas mit dem Arbeitsmedium wird so vermieden.

Zweckmäßigerweise ist der Energiewandler als durch eine Turbine angetriebener Generator ausgebildet und das Arbeitsmedium in einem geschlossenen Kreislauf durch Wärmetauscher und Turbine geführt. Das gleichmäßig aufgeheizte Arbeitsmedium kann jetzt die Turbine und somit den Generator mit einer fortwährend gleichen Drehzahl antreiben, sodass auf vorteilhafte Weise Drehzahlschwankungen in der Stromerzeugung vermieden werden können.

Nachfolgend wird ein Ausführungsbeispiel der Erfindung anhand der Zeichnungen näher erläutert. Hierin zeigen:
- FIG 1: einen zeitlichen Verlauf eines diskontinuierlichen Ab- gasstromes eines Schmelzofens in unterschiedlichen Be- triebsphasen,
- FIG 2: eine Vorrichtung zur Umwandlung des diskontinuierli- chen Abgasstromes in einen kontinuierlichen Abgasstrom zur Erzeugung von elektrischer Energie,
- FIG 3: eine prinzipielle Darstellung des Abführens eines Teilstromes von dem diskontinuierlichen Abgasstrom und
- FIG 4: eine prinzipielle Darstellung des Zuführens eines Teilstromes zu dem diskontinuierlichen Abgasstrom.

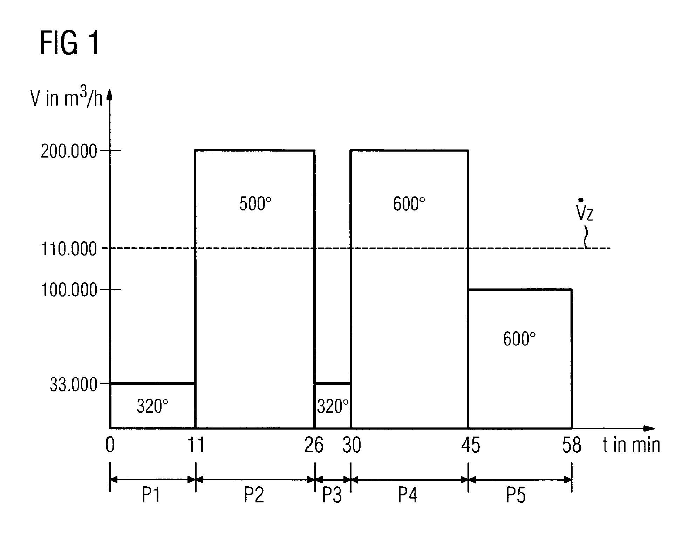

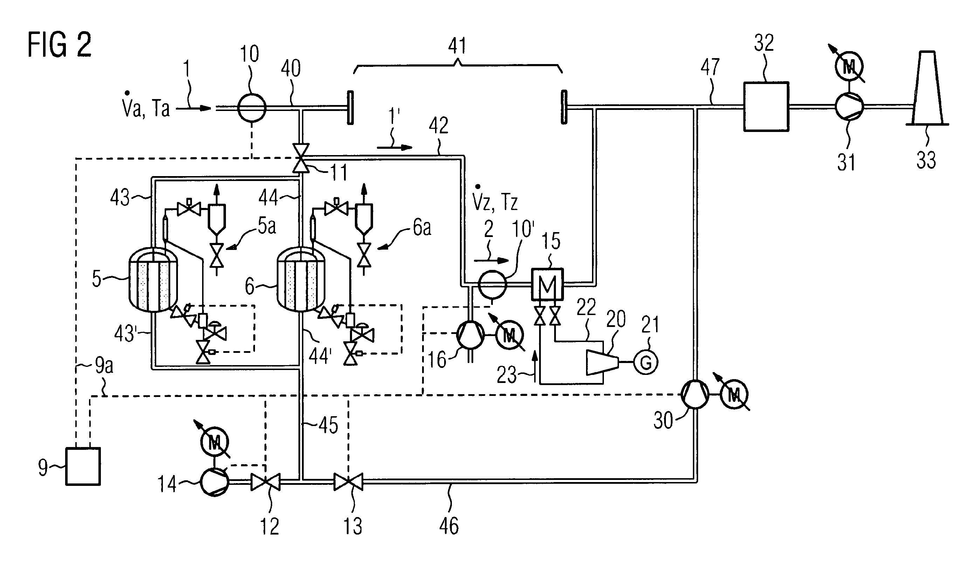

FIG 1 zeigt den zeitlichen Verlauf des Volumenstromes eines diskontinuierlichen Abgasstromes (im Nachfolgenden unter Verweis auf FIG 2 mit 1 bezeichnet), wie er beim Betrieb eines elektrischen Lichtbogenofens in einem Stahlwerk auftreten kann. Entsprechend der unterschiedlichen Betriebsphasen des Ofens weist der Abgasstrom in aufeinander folgenden Betriebsphasen P1 bis P5 unterschiedliche Volumenströme sowie Abgastemperaturen auf, die jedoch während einer Betriebsphase konstant sind.

Während einer ersten Betriebsphase P1 wird flüssiger Stahl abgestochen und ein erster Schrottkorbe nachgefüllt. In dieser 11 min. andauernden Phase P1, weist der Abgasstrom 1 einen Volumenstrom V̇a von 33.000 m³/h und eine Temperatur Ta von 320 °C auf.

Während der anschließenden zweiten Betriebsphase P2 findet ein erster Einschmelzvorgang statt, wobei sich der Wechsel zu dieser zweiten Betriebsphase P2 durch einen Sprung in Volumenstrom V̇a und Temperatur Ta bemerkbar macht. In der zweiten Betriebsphase P2 weist der Abgasstrom 1 einen Volumenstrom V̇a von 200.000 m³/h und eine Temperatur Ta von 500 °C während einer Zeitdauer von 15 min. auf.

An die zweite Betriebshase P2 schließt sich ebenfalls durch eine sprunghafte Änderung im Volumenstrom V̇a und Temperatur Ta die dritte Betriebshase P3 mit einer Zeitdauer von 4 min. an, während der ein zweiter Schrottkorb eingefüllt wird. Die Ausgangswerte des Abgasstromes 1 bzgl. der Temperatur Ta und des Volumenstromes V̇a entsprechen denen der ersten Betriebsphase P1.

Der dritten Betriebsphase P3 schließt sich, wiederum durch eine sprunghafte Änderung von Volumenstrom V̇a und Temperatur Ta, die vierte Betriebsphase P4 an, während der die erste Stufe eines zweiten Einschmelzvorgangs stattfindet. In der vierten Betriebsphase P4 weist der Abgasstrom 1 über eine Zeitdauer von 15 min. einen Volumenstrom V̇a von 200.000 m³/h und eine Temperatur Ta von 600 °C auf.

Nach Ablauf der vierten Betriebsphase P4 schließt sich, wiederum durch eine sprunghafte Änderung, die fünfte Betriebsphase P5 an, welche einer zweiten Stufe des zweiten Einschmelzvorgangs entspricht. Der Ausgangswert des Volumenstromes Va hat in der 13 min. andauernden fünften Betriebsphase P5 einen Wert von 100.000 m³/h bei einer Temperatur Ta von 600 °C.

Die fünf Betriebsphasen P1 bis P5, mit jeweils phasenweise konstanten Ausgangswerten für Volumenstrom V̇a und Temperatur Ta bilden also den diskontinuierlichen Abgasstrom 1. Erfindungsgemäß wird der diskontinuierliche Abgasstrom 1 in einen kontinuierlichen Arbeitsstrom 2 (vgl. FIG 2) mit einem annähernd konstanten Zielwert für den Volumenstrom V̇z von 110.000 m³/h bei einem Zielwert der Temperatur Tz von 320°C umgewandelt. Mit diesen konstanten Zielwerten wird mit Hilfe eines Wärmetauschers 15, wie in FIG 2 beschrieben, elektrische Energie erzeugt.

FIG 2 zeigt eine Vorrichtung zur Umwandlung des hinsichtlich seiner Ausgangswerte für Volumenstrom V̇a und Temperatur Ta in den unterschiedlichen Betriebsphasen P1 bis P5 vorliegenden diskontinuierlichen Abgasstromes 1 in den kontinuierlichen Arbeitsstrom 2 mit annähernd konstanten Zielwerten für Volumenstrom V̇z und Temperatur Tz.

Der den Ofen verlassende Abgasstrom 1 wird über eine als Rohrleitung ausgebildete Abgaszuführung 40 vorbei an Messmitteln 10 zu Stellmitteln 11 geleitet. Die Messmittel 10 sind als ein Temperatursensor und als ein Strömungsmesser ausgebildet und in der Abgaszuführung 40 angeordnet. Die aktuellen Ausgangswerte für Volumenstrom V̇a und Temperatur Ta werden über die Messmittel 10 ermittelt und zu einem Automatisierungsgerät 9 über ein Bussystem 9a übertragen. Über das Automatisierungsgerät 9 werden in Abhängigkeit der aktuellen Ausgangwerte für Volumenstrom V̇a und Temperatur Ta die Stellmittel 11, ein erstes Ventil 12, ein zweites Ventil 13 und ein Verdichter 14 derart eingestellt, dass von dem Abgasstrom 1 ein Teilstrom abführbar oder zu dem Abgasstrom 1 ein Teilstrom zuführbar ist. Die Stellmittel 11 stehen mit der Abgasführung 40, einer Rohreitung 42 und Rohren 43, 44 in Verbindung. Die Rohrleitung 42 führt von den Stellmitteln 11 zu einem Punkt, an dem die Rohrleitung 42 mit Zuführmitteln 16 verbunden ist. Über die Zuführmittel 16 kann zusätzliche Kaltluft mittels eines motorgetrieben Kompressors in die Rohrleitung 42 eingespeist werden. Im weiteren Verlauf der Rohrleitung 42 sind weitere Messmittel 10' zur Erfassung der Zielwerte für Volumenstrom V̇z und Temperatur Tz des in diesem Teil der Rohrleitung 42 vorliegenden Arbeitsstromes 2 angeordnet. Die Messmittel 10' sind zur Übertragung der gemessenen Zielwerte für Volumenstrom V̇z und Temperatur Tz über das Bussystem 9a an das Automatisierungsgerät 9 angeschlossen. Stromabwärts der Messmittel 10' ist an der Rohrleitung 42 ein Wärmetauscher 15 angeordnet.

Nach dem Wärmetauscher 15 führt die Rohrleitung 42 in eine Abgasführung 47, mit welcher der Abgas aufweisende Arbeitsstrom 2 eingangsseitig einer Rauchgasreinigung 32 zugeführt wird. Ausgangsseitig steht die Rauchgasreinigung 32 mit einer Absaugvorrichtung 31 in Verbindung. Der Absaugvorrichtung 31 ist ein Kamin 33 nachgeschaltet.

Die Rohre 43 und 44 verbinden die Stellmittel 11 mit je einer Eingansseite von zwei wärmespeichernden Elementen 5, 6, wobei die Rohre 43, 44 zur Weiterleitung transportierter Wärme des durch die Stellmittel 11 abgeführten Teilstromes durch die wärmespeichernden Elemente 5 und 6 dienen. Zur Zuführung eines Teilstromes an die Stellmittel 11, welcher dann in entgegen gesetzter Richtung durch die wärmespeichernden Elemente 5, 6 geführt wird, werden die Rohre 43, 44 ebenfalls genutzt.

Weitere Rohre 43', 44' verbinden die Ausgangsseiten der wärmespeichernden Elemente 5, 6 mit einen Rohr 45. Das Rohr 45 ist mit einen Abführrohr 46 verbunden. Das Abführrohr 46 weist das erste Ventil 12 und das zweite Ventil 13, jeweils links und rechts von der Verbindungsstelle des Rohres 45 mit dem Abführrohr 46 auf.

Beim Durchleiten eines über die Stellmittel 11 abgeführten Teilstromes durch die wärmespeichernden Elemente 5, 6 befindet sich das erste Ventil 12 in einer geschlossenen Stellung und das zweite Ventil 13 in einer geöffneten Stellung. Über das zweite Ventil 13 wird der durch die Wärmeabgabe an die wärmespeichernden Elemente 5, 6 abgekühlte Teilstrom mittels des Abführrohres 46 über eine Absaugvorrichtung 30 in die Abgasführung 47 geleitet.

Das Zuführen von Umgebungsluft zu dem Stellmittel 14 erfolgt über den Verdichter 14, welcher an einem Ende des Abführrohres 46 vor dem ersten Ventil 12 angeordnet ist. Das erste Ventil 12 befindet sich dabei in einer geöffneten und das zweite Ventil 13 in einer geschlossenen Stellung.

Der Wärmetauscher 15 steht mit der Rohrleitung 42 zum Wärmeübergang der mit dem kontinuierlich vorliegenden Arbeitsstrom 2 geführten Wärmeenergie an den Wärmetauscher 15 in Verbindung. Vor der Abgabe der Wärme an den Wärmetauscher 15 beträgt die Temperatur Tz des Arbeitsstromes 2 ca. 320 °C, die nach der Abgabe verbleibende Temperatur liegt bei ca. 100 °C.

Zur Umwandlung der Wärmeenergie in elektrische Energie ist der Wärmetauscher 15 an einen geschlossenen Kreislauf 22 angeschlossen. In dem geschlossenen Kreislauf 22 zirkuliert ein Arbeitsmedium 23, welches mittels des Wärmetauschers 15 und dem jetzt kontinuierlich vorliegenden Arbeitsstrom 2 gleichmäßig erhitzt wird. Das Arbeitsmedium 23 treibt wiederum eine Turbine 20 an, welche mit einem Generator 21 zur Stromerzeugung gekoppelt ist.

Die Vorrichtung nach FIG 2 ist dazu ausgelegt, den in FIG 1 beschriebenen diskontinuierlich vorliegenden Abgasstrom 1 in einen kontinuierlichen Arbeitsstrom 2 mit annähernd konstanten Zielwerten für den Volumenstrom V̇z und für die Temperatur Tz umzuwandeln.

Im Bereich 41 verlief nach dem Stand der Technik ein Abgaskanal, symbolisch durch zwei Begrenzungsstriche abgebildet, in welchem der heiße Abgasstrom 1 heruntergekühlt wurde, um anschließend der nach geschalteten Rauchgasreinigung 32 zugeführt zu werden. Bei diesem Herunterkühlen wurde bisher die in dem Abgasstrom 1 transportierte Wärmeenergie nicht genutzt.

Mit der erfindungsgemäßen Vorrichtung wird auf vorteilhafte Weise der bisherige Abgaskanal 41 ersetzt oder in seinen räumlichen Ausdehnungen wesentlich reduziert. Die bisherigen Kühlwasserkosten, beispielsweise zur Wasseraufbereitung, im Falle eines Kühlturmbetriebes, fallen ebenfalls weg.

Bei einem Einsatz von Schüttgutregeneratoren für die wärmespeichernden Elemente 5, 6 können die Schüttgutregeneratoren weiterhin vorteilhaft als Staubfilter genutzt werden. Bei einer Reduzierung des Staubgehaltes des Abgasstromes 1 könnte sogar fallweise auf die nachgeschaltete Rauchgasreinigung 32 verzichtet werden. Bisherige Rauchgasreinigungsanlagen können somit komplett abgeschaltet werden bzw. nur in einem Teillastbereich für eine weiters nach geschaltete Feinentstaubung arbeiten.

Bei Schüttgutregeneratoren kann der angesammelte Staub während des Betriebes, durch Umwälzung des Schüttgutes mittels der Reinigungseinrichtungen 5a, 6a ausgetragen werden. Da sich die Staubablagerung in den ersten 5 bis 10 cm eines Schüttgutbettes absetzt, wird zur Reinigung nur diese untere Schicht von Staubablagerungen befreit. Ein Einbau eines zusätzlichen Rostes in einem Abstand von 5 bis 10 cm vom Boden des Schüttgutregenerators verhindert, dass restliches Schüttgut des Schüttgutregenerators bei einer Reinigung der unteren Zone nachrutscht. Eine reinigende Umwälzung des Schüttgutes kann mittels Druckluft erfolgen.

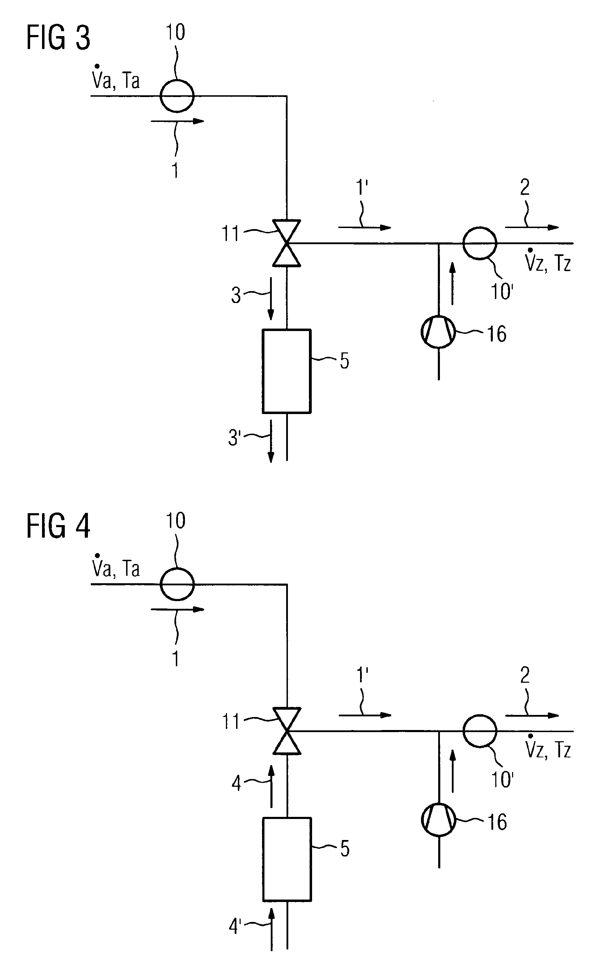

Anhand FIG 3 und 4 wird das Grundprinzip des Ab- und Zuführens des Teilstromes von oder zu einem Abgasstrom 1 erläutert. Über Messmittel 10 werden die Ausgangswerte für Volumenstrom V̇a und Temperatur Ta erfasst. Für den Fall, dass der aktuelle Ausgangswert des Volumenstromes V̇a größer ist als der anzustrebenden Zielwert des Volumenstromes V̇z, wie es in der Betriebsphase P2 nach FIG 1 der Fall ist, wird vom Abgasstrom 1 ein Teilstrom 3 abgeführt, sodass der verbleibende Volumenstrom des Abgasstromes 1' dem Zielwert Vz nahezu entspricht. Der abgeführte Teilstrom 3 wird durch das wärmespeichernde Element 5 zur Abgabe von Wärme an das Element 5 geführt. Der entsprechend abgekühlte Teilstrom 3' wird aus dem wärmespeichernden Element 5 geleitet.

Der Volumenstrom im abzuführenden Teilstrom 3 richtet sich neben dem Ausgangswert für den Volumenstrom V̇a auch nach dem Ausgangswert der Temperatur Ta des Abgasstromes 1 in den unterschiedlichen Betriebsphasen des Ofens. Ist der Ausgangswert für die Temperatur Ta bereits gleich seinem Zielwert Tz, so wird nur soviel von dem Abgasstrom 1 abgeführt, dass der Zielwert für den Volumenstrom V̇z erreicht wird. Ist der Ausgangswert für die Temperatur Ta größer als sein Zielwert Tz, so wird zusätzlich zu dem abgeführten Anteil zur Erreichung des Zielwertes des Volumenstromes V̇z ein weiterer Anteil an Volumenstrom vom Abgasstrom 1 abgeführt. Dieser weitere Anteil wird zur Einstellung des Zielwertes für die Temperatur Tz über die Zuführmittel 16 dem Abgasstrom 1' wieder zugegeben. So wird der Zielwert des Volumenstromes V̇z im Arbeitsstrom 2 eingehalten. Die Zielwerte werden nach den Zuführmitteln 16 mittels der Messmittel 10' erfasst.

Für den Fall, dass der Ausgangswert des Volumenstromes V̇a kleiner als der Zielwert des Volumenstromes V̇z ist, ist dem Abgasstrom 1 ein Teilstrom 4 über die Stellmittel 11 zuzuführen, was in FIG 4 veranschaulicht ist. Zur Erreichung der Zielgröße V̇z des Arbeitsstromes 2 wird dem Abgasstrom 1 über die Stellmittel 11 ein durch das wärmespeichernde Element 5 geführter Teilstrom 4 zugeführt. Der von seiner Temperatur niedrigere Teilstrom 4', welcher der Umgebungsluft entnommen wird, wird während des Durchleitens durch das wärmespeichernde Element 5 zu einem Teilstrom 4 mit einer erhöhten Temperatur. Diese durch den Teilstrom 4 transportierte zusätzliche Wärme wird zur Erreichung der Zieltemperatur Tz dem Abgasstrom 1 zugeführt, sodass die Summe aus Teilstrom 4 und Abgasstrom 1 dem weiteren Abgasstrom 1' mit nahezu erreichten Zielwerten für Volumenstrom Vz und Temperatur Tz entspricht.

Auch hier gilt: ist der Ausgangswert für die Temperatur Ta bereits gleich seinem Zielwert Tz, so wird nur soviel an Volumenstrom dem Abgasstrom 1 zugeführt, dass der Zielwert für den Volumenstrom V̇z erreicht wird. Dies setzt allerdings voraus, dass die Temperatur des zugeführten Teilstroms 4 die Temperatur Tz des Zielwertes aufweist. Ist der Ausgangswert für die Temperatur Ta größer als sein Zielwert Tz, so wird dem Abgasstrom 1 weniger an Volumenstrom über die Stellmittel 11 zugeführt, als zur Erreichung des Zielwertes für den Volumenstrom V̇z nötig ist. Der um diesen Anteil reduzierte Volumenstrom des Abgasstromes 1' wird ebenfalls über die Zuführmittel 16 zur Erreichung des Zielwertes für die Temperatur Tz als Kaltluft wieder zugegeben. Auf diese Weise können die Zielwerte für Volumenstrom V̇a und Temperatur Tz im Arbeitsstrom eingestellt werden. Je nach zur Verfügung stehender Temperatur im zugeführten Teilstrom 4 wird durch entsprechende Zufuhr von Kaltluft über die Zuführmittel 16 die Zieltemperatur Tz eingestellt, wobei die Volumenströme aus Abgasstrom 1, Teilstrom 4 und Kaltluftstrom zusammen den Zielwert Vz ergeben. Es kann auch vorkommen, dass die Temperatur Ta des Abgasstromes 1 die Zieltemperatur Tz bereits wesentlich übersteigt, in diesem Fall ist es nicht notwendig den Teilstrom 4 zuzuführen. Die Zielwerte für Temperatur Tz und Volumenstrom Vz können dann alleine durch Zugabe von Kaltluft über die Zuführmittel 16 erreicht werden.

Weitere für die Erfindung wesentliche Gedanken sind Folgende: Um einen kontinuierlichen Betrieb der Turbine 20 und des Generators 21 zu gewährleisten, kann neben den zwei parallel betriebenen Schüttgutregeneratoren 5, 6 ein dritter Schüttgutregenerator als Reserve-Regenerator vorgesehen werden. Für den Fall, dass ein Schüttgutregenerator ausfällt, kann der Reserveregenerator quasi lückenlos zugeschaltet werden und die Umwandlung in einen kontinuierlichen Abgasstrom bleibt gewährleistet und somit auch eine kontinuierliche Stromerzeugung.

## Patentansprüche

1. Verfahren zur Nutzung von durch einen diskontinuierlichen Abgasstrom (1) transportierter Wärme, wobei der diskontinuierliche Abgasstrom (1) in Phasen (P1,P2,P3,P4,P5) mit jeweils konstanten Ausgangswerten (V̇a, Ta) für Volumenstrom und Temperatur von einer Industrieanlage, insbesondere einem Industrieofen, abgegeben wird, wobei die Ausgangswerte durch Messmittel erfasst werden, wobei der diskontinuierliche Abgasstrom (1) in einen kontinuierlichen Arbeitsstrom (2) mit einstellbaren konstanten Zielwerten (V̇z, Tz) für Volumenstrom und Temperatur durch ein Zusammenwirken der Messmittel mit Stellmitteln zur Abzweigung oder Zuführung eines Teilstromes vom bzw. zum Abgasstrom umgewandelt wird, und wobei die im kontinuierlichen Arbeitsstrom (2) transportierte Wärme in mechanische oder elektrische oder thermische Nutzenergie umgewandelt wird.

2. Verfahren nach Anspruch 1, wobei während einer ersten Phase (P2,P4), in welcher der Ausgangswert (V̇a) des Volumenstromes größer ist als sein Zielwert (V̇z), ein Teilstrom (3,3') von dem Abgasstrom (1) abgeführt wird.

3. Verfahren nach Anspruch 1 oder 2, wobei während einer zweiten Phase (P1,P3,P5), in welcher der Ausgangswert (Va) des Volumenstromes kleiner ist als sein Zielwert (V̇z), dem Abgasstrom (1) ein Teilstrom (4,4') zugeführt wird.

4. Verfahren nach Anspruch 2 oder 3, wobei dem Abgasstrom (1) Umgebungsluft zugeführt wird.

5. Verfahren nach einem der Ansprüche 2 bis 4, wobei der abgeführte Teilstrom (3) durch ein wärmespeicherndes Element (5) geleitet und dabei vom Teilstrom (3) transportierte Wärme an das Element (5) übertragen wird.

6. Verfahren nach Anspruch 5, wobei der zuzuführende Teilstrom (4') durch das wärmespeichernden Element (5) geleitet und dabei die im Element (5) gespeicherte Wärme an den Teilstrom (4') übertragen wird.

7. Verfahren nach Anspruch 5 oder 6, wobei die Teilströme (3, 3', 4, 4') parallel durch mehrere wärmespeichernde Elemente (5,6) geleitet werden.

8. Verfahren nach einem der Ansprüche 1 bis 7, wobei vom Arbeitsstrom (2) transportierte Wärme an ein Arbeitsmedium (23) übertragen wird, welches einen Energiewandler antreibt.

9. Verfahren nach Anspruch 8, wobei das Arbeitsmedium (23) in einem geschlossenen Kreislauf (22) zirkuliert und eine mit einem Generator (21) gekoppelte Turbine (20) antreibt.

10. Vorrichtung zur Nutzung von durch einen diskontinuierlichen Abgasstrom (1) transportierter Wärme, wobei der diskontinuierliche Abgasstrom (1) in Phasen (P1, P2, P3, P4, P5) mit jeweils konstanten Ausgangswerten (V̇a, Ta) für Volumenstrom und Temperatur von einer Industrieanlage, insbesondere einem Industrieofen, abgegeben wird, umfassend Messmittel (10) zur Erfassung der Ausgangswerte (V̇a, Ta) für Volumenstrom und Temperatur des durch die Industrieanlage abgegebenen Abgasstromes (1), Stellmittel (11) zur Abzweigung oder Zuführung eines Teilstromes (3,4) vom bzw. zum Abgasstrom (1), wobei die Stellmittel (11) mit den Messmitteln (10) derart zusammenwirken, dass der Abgasstrom (1) in einen kontinuierlichen Arbeitsstrom (2) mit konstanten Zielwerten (V̇z, Tz) für Volumenstrom und Temperatur umgewandelt wird, und Mittel zur Umwandlung von im kontinuierlichen Arbeitsstrom (2) transportierter Wärme in mechanische oder elektrische oder thermische Nutzenergie.

11. Vorrichtung nach Anspruch 10,
wobei die Stellmittel (11) derart ausgebildet sind, dass während einer ersten Phase (P2,P4), in welcher der Ausgangswert (V̇a) des Volumenstromes größer ist als sein zielwert (V̇z), ein Teilstrom (3,3') von dem Abgasstrom (1) abführbar ist und wobei während einer zweiten Phase (P1,P3,P5), in welcher der Ausgangswert (Va) des Volumenstromes kleiner ist als sein Zielwert (V̇z), dem Abgasstrom (1) ein Teilstrom (4,4') zuführbar ist.

12. Vorrichtung nach Anspruch 11,
wobei Zuführmittel (16) zur Zuführung von Umgebungsluft zu dem Abgasstrom (1') stromabwärts nach den Stellmitteln (11) angeordnet sind.

13. Vorrichtung nach Anspruch 11 oder 12,
welche ein wärmespeicherndes Element (5,6) aufweist, durch das der vom Abgasstrom (1) abgeführte Teilsstrom (3) zur Wärmeabgabe und der dem Abgasstrom (1) zuzuführende Teilstrom (4') zur Wärmeaufnahme leitbar ist.

14. Vorrichtung nach einem der Ansprüche 10 bis 13, wobei die Mittel zur Umwandlung einen Wärmetauscher (15) mit einem Arbeitsmedium (23) aufweisen, mit welchem Wärme kontinuierlich aus dem Arbeitsstrom (2) aufnehmbar und einem Energiewandler zur Umwandlung der Wärme in Nutzenergie zuführbar ist.

15. Vorrichtung nach Anspruch 14, wobei der Energiewandler als durch eine Turbine (20) angetriebener Generator (21) ausgebildet ist, und das Arbeitsmedium (23) in einem geschlossenen Kreislauf (22) durch Wärmetauscher (15) und Turbine (20) geführt ist.

## Claims

1. Method for utilizing heat transported by a discontinuous flow of waste gas (1), the discontinuous flow of waste gas (1) being discharged in phases (P1, P2, P3, P4, P5) with in each case constant starting values (V̇a, Ta) for the volume flow and the temperature of an industrial installation, in particular an industrial furnace, the starting values being recorded by measuring means, the discontinuous flow of waste gas (1) being converted into a continuous working flow (2) with settable constant target values (V̇z, Tz) for the volume flow and the temperature by an interaction of the measuring means with adjusting means for the branching off or supplying of a partial flow from or to the flow of waste gas, and the heat that is transported in the continuous working flow (2) being converted into useful mechanical or electrical or thermal energy.

2. Method according to Claim 1, wherein, during a first phase (P2, P4), in which the starting value (V̇a) of the volume flow is greater than its target value (V̇z), a partial flow (3, 3') is removed from the flow of waste gas (1).

3. Method according to Claim 1 or 2, wherein, during a second phase (P1, P3, P5), in which the starting value (V̇a) of the volume flow is less than its target value Vz, a partial flow (4, 4') is supplied to the flow of waste gas (1).

4. Method according to Claim 2 or 3, wherein ambient air is supplied to the flow of waste gas (1).

5. Method according to one of Claims 2 to 4, wherein the removed partial flow (3) is directed through a heat-accumulating element (5) and heat transported by the partial flow (3) is thereby transferred to the element (5).

6. Method according to Claim 5, wherein the partial flow (4') to be supplied is directed through the heat-accumulating element (5) and the heat accumulated in the element (5) is thereby transferred to the partial flow (4').

7. Method according to Claim 5 or 6, wherein the partial flows (3, 3', 4, 4') are directed in parallel through a number of heat-accumulating elements (5, 6).

8. Method according to one of Claims 1 to 7, wherein heat transported by the working flow (2) is transferred to a working medium (23), which drives an energy converter.

9. Method according to Claim 8, wherein the working medium (23) circulates in a closed circuit (22) and drives a turbine (20) coupled to a generator (21).

10. Device for utilizing heat transported by a discontinuous flow of waste gas (1), the discontinuous flow of waste gas (1) being discharged in phases (P1, P2, P3, P4, P5) with in each case constant starting values (V̇a, Ta) for the volume flow and the temperature of an industrial installation, in particular an industrial furnace, comprising measuring means (10) for recording the starting values (V̇a, Ta) for the volume flow and the temperature of the flow of waste gas (1) given off by the industrial installation, adjusting means (11) for branching off or supplying a partial flow (3, 4) from or to the flow of waste gas (1), wherein the adjusting means (11) interact with the measuring means (10) in such a way that the flow of waste gas (1) is converted into a continuous working flow (2) with constant target values (V̇z, Tz) for the volume flow and the temperature, and means for converting heat transported in the continuous working flow (2) into useful mechanical or electrical or thermal energy.

11. Device according to Claim 10, wherein the adjusting means (11) are formed in such a way that, during a first phase (P2, P4), in which the starting value (V̇a) of the volume flow is greater than its target value (V̇z), a partial flow (3, 3') can be removed from the flow of waste gas (1) and, during a second phase (P1, P3, P5), in which the starting value (V̇a) of the volume flow is less than its target value (V̇z), a partial flow (4, 4') can be supplied to the flow of waste gas (1).

12. Device according to Claim 11, wherein supply means (16) for supplying ambient air to the flow of waste gas (1') are arranged downstream of the adjusting means (11).

13. Device according to Claim 11 or 12, which has a heat-accumulating element (5, 6), through which the partial flow (3) removed from the flow of waste gas (1) for giving off heat and the partial flow (4') to be supplied to the flow of waste gas (1) for taking up heat can be directed.

14. Device according to one of Claims 10 to 13, wherein the means for the conversion have a heat exchanger (15) with a working medium (23), with which heat can be continuously taken up from the working flow (2) and supplied to an energy converter for the conversion of the heat into useful energy.

15. Device according to Claim 14, wherein the energy converter is formed as a generator (21) driven by a turbine (20), and the working medium (23) is passed in a closed circuit (22) through the heat exchanger (15) and the turbine (20).

## Revendications

1. Procédé d'utilisation de chaleur transportée par un courant ( 1 ) de gaz d'échappement discontinu, le courant ( 1 ) de gaz d'échappement discontinu étant cédé par une installation industrielle, notamment par un four industriel en phase ( P1, P2, P3, P4, P5 ) ayant respectivement des valeurs ( V̇a, Ta ) constantes de sortie du courant en volume et de la température, les valeurs de sortie étant relevées par des moyens de mesure, le courant ( 1 ) de gaz d'échappement discontinu étant transformé en courant ( 2 ) de travail continu ayant des valeurs ( V̇z, Tz ) cibles réglables constantes du courant en volume et de la température, par une coopération des moyens de mesure avec des moyens de réglage, pour dériver un courant partiel du courant de gaz d'échappement ou pour ajouter un courant partiel au courant de gaz d'échappement, et dans lequel la chaleur transportée dans le courant ( 2 ) de travail continu est transformée en énergie utile mécanique ou électrique ou thermique.

2. Procédé suivant la revendication 1, dans lequel pendant une première phase ( P2, P4 ), dans laquelle la valeur ( V̇a ) de sortie du courant en volume est plus grande que sa valeur ( V̇z ) cible, un courant ( 3, 3' ) partiel est retiré du courant ( 1 ) de gaz d'échappement.

3. Procédé suivant la revendication 1 ou 2, dans lequel pendant une deuxième phase ( P1, P3, P5 ), dans laquelle la valeur ( V̇a ) de sortie du courant en volume est plus petite que sa valeur ( V̇z ) cible, un courant ( 4, 4' ) partiel est ajouté au courant ( 1 ) de gaz d'échappement.

4. Procédé suivant la revendication 2 ou 3, dans lequel de l'air ambiant est ajouté au courant ( 1 ) de gaz d'échappement.

5. Procédé suivant l'une des revendications 2 à 4, dans lequel on fait passer le courant ( 3 ) partiel retiré dans un élément ( 5 ) emmagasinant de la chaleur et on transmet ainsi à l'élément ( 5 ) de la chaleur transportée par le courant ( 3 ) partiel.

6. Procédé suivant la revendication 5, dans lequel on fait passer le courant ( 4' ) partiel ajouté dans un élément ( 5 ) emmagasinant de la chaleur et on transmet ainsi au courant ( 4 ) partiel de la chaleur emmagasinée dans l'élément ( 5 ).

7. Procédé suivant la revendication 5 ou 6, dans lequel on fait passer les courants ( 3, 3', 4, 4' ) partiels parallèlement dans plusieurs éléments ( 5, 6 ) emmagasinant de la chaleur.

8. Procédé suivant l'une des revendications 1 à 7, dans lequel on transmet de la chaleur transportée par le courant ( 2 ) de travail à un fluide ( 3 ) de travail qui entraîne un convertisseur d'énergie.

9. Procédé suivant la revendication 8, dans lequel le fluide ( 23 ) de travail circule dans un circuit ( 22 ) fermé et entraîne une turbine ( 20 ) couplée à une génératrice ( 21 ).

10. Dispositif d'utilisation de chaleur transportée par un courant ( 1 ) de gaz d'échappement discontinu, dans lequel le courant ( 1 ) de gaz d'échappement discontinu est cédé par une installation industrielle, notamment par un four industriel, en phases ( P1, P2, P3, P4, P5 ) ayant des valeurs ( V̇a, Ta ) de sortie respectivement constantes du courant en volume et de la température, comprenant des moyens ( 10 ) de mesure pour relever les valeurs ( V̇a, Ta ) de sortie du courant en volume et de la température du courant ( 1 ) de gaz d'échappement cédé par l'installation industrielle, des moyens ( 11 ) de réglage pour retirer un courant ( 3, 4 ) partiel du courant ( 1 ) de gaz d'échappement ou pour ajouter un courant ( 4 ) partiel au courant ( 1 ) de gaz d'échappement, les moyens ( 11 ) de réglage coopérant avec les moyens ( 10 ) de mesure, de manière à transformer le courant ( 1 ) de gaz d'échappement en un courant ( 2 ) de travail continu ayant des valeurs ( V̇z, Tz ) cibles constantes du courant en volume et de la température, et des moyens de transformation de la chaleur transportée dans le courant ( 2 ) de travail continu en énergie utile, mécanique ou électrique ou thermique.

11. Dispositif suivant la revendication 10,
les moyens ( 11 ) de réglage sont tels que, pendant une première phase ( P2, P4 ), dans laquelle la valeur ( V̇a ) de sortie du courant en volume est plus grande que sa valeur ( V̇z ) cible, un courant ( 3, 3' ) partiel peut être retiré du courant ( 1 ) de gaz d'échappement et dans lequel, pendant une deuxième phase ( P1, P3, P5 ), dans laquelle la valeur ( V̇a ) de sortie du courant en volume est plus petite que sa valeur ( V̇z ) cible, un courant ( 4, 4' ) partiel peut être ajouté au courant ( 1 ) de gaz d'échappement.

12. Dispositif suivant la revendication 11,
dans lequel des moyens ( 16 ) d'addition d'air ambiant au courant ( 1' ) de gaz d'échappement sont disposés en aval après les moyens ( 11 ) de réglage.

13. Dispositif suivant la revendication 11 ou 12,
qui comporte un élément ( 5, 6 ) emmagasinant de la chaleur, dans lequel le courant ( 3 ) partiel retiré du courant ( 1 ) de gaz d'échappement peut passer pour céder de la chaleur et le courant ( 4' ) partiel ajouté au courant ( 1 ) de gaz d'échappement peut passer pour absorber de la chaleur.

14. Dispositif suivant l'une des revendications 10 à 13, dans lequel les moyens de transformation comportent un échangeur de chaleur ( 15 ) ayant un fluide ( 23 ) de travail, par lequel de la chaleur peut être absorbée en continu du courant ( 2 ) de travail et être envoyée à un convertisseur d'énergie, pour la transformation de la chaleur en énergie utile.

15. Dispositif suivant la revendication 14, dans lequel le convertisseur d'énergie est constitué sous la forme d'une génératrice ( 21 ) entraînée par une turbine ( 20 ) et le fluide ( 23 ) de travail passe par l'échangeur de chaleur ( 15 ) et la turbine ( 20 ) en circuit ( 22 ) fermé.
